# EUROPEAN PATENT SPECIFICATION

(11) **EP 4 483 704 B1**
(45) Date of publication and mention of the grant of the patent: **09.09.2026**
(21) Application number: 24184317.6
(22) Date of filing: 25.06.2024
(51) Int. Cl.: A01G 3/04, B02C 4/08, B02C 4/28, B02C 4/30

(54) **GRINDING MACHINE**
ZERKLEINERUNGSMASCHINE
MACHINE DE BROYAGE

(30) Priority: 27.06.2023 ES 202331141 U
(43) Date of publication of application: 01.01.2025
(73) Proprietor: Maquinaria Agricola Agrator, S.L., 01015 Vitoria Alava (ES)
(72) Inventor: Ibañez Cereceda, Alexander, 01015 Vitoria (Alava) (ES)
(74) Representative: Ungria López, Javier

(56) References cited:
- EP-A1- 3 892 378
- ES-A1- 2 606 775
- ES-U- 1 074 376
- JP-A- 2015 093 244

## Description

### Object of the invention

The present invention is within the field of devices, apparatuses and assemblies used in activities related to agricultural production and agriculture, and more particularly, the invention specifically falls within the sector of machinery oriented toward grinding, weeding and cleaning of the fields by chopping up the agricultural remains therein.

The object of the invention consists of a grinding machine for pruning remains the configuration and design of which optimises the grinding of the material that is introduced therein, thus minimising the effort for chopping up the material, which means less effort of the towing vehicle and a reduction in the jamming risks that usually occur in existing chopping machines.

### Technical problem to be resolved and background of the invention

Currently, there are a large number of machines on the agricultural sector market configured to grind scrub, clear land and/or remove pruning remains, called grinding or chopping machines, designed to be conveyed or guided by tractor vehicles.

These chopping, grinding or weeding machines consist of a roller feed system that introduces the material into the grinder, wherein said material is ground by means of blades arranged along different frames or longitudinal profiles.

The objective of these machines is to be able to grind even large logs, of high hardness, at high speed, which allows them to be fed with a large volume of material present in the terrain through which said chopping machine moves.

In the current market, grinding machines have two important problems. The first of them is that the aligned arrangement of the blades in the machines causes the wood to be squashed when grinding said waste material, this being the most difficult way to carry out said grinding, since the resistance of the wood is always greater in the direction perpendicular to the fibres.

Moreover, grinding machines have the problem of removing, in a quick and efficient manner, the material chopped by the grinding machine, which can accumulate inside and make its operation difficult, since said material can affect the movement of the components of the mechanism that perform the grinding.

Many of these grinding machines have a comb therein acting as a sieve, since it does not have any edge that facilitates the grinding of the material, after a deposit chamber where the waste that is not expelled is stored. This chamber, once it has been filled, can cause jams in the mechanisms, making it necessary to stop the grinding operation and proceed to empty the same, which can slow down the process of cleaning, weeding and grinding the waste.

Many of these machines have access from the outside to this chamber so that the user can empty the same, but in most cases, carrying out said process requires stopping the grinding process.

Document ES 2606775 A1, has been identified. This document describes a feeding assembly for agricultural residue shredding machines. Key features include at least two feeding rollers, upper and lower, with teeth that rotate in opposite directions, installed parallel to a rotor. These rollers are linked to protective grilles with slots that the teeth enter during rotation, which helps prevent entanglement of fibrous material.

Secondly, document ES1074376U describes an improved shredder for pruning residues. This shredder features feeders arranged parallel to the rotor, rotating in opposite directions to introduce material into the grinding chamber. Other features include an open cavity without a sieve and fixed, interchangeable cutting blades on the rotor arranged with an offset forming a helix shape to draw material towards the centre.

### Description of the invention

The present invention consists of a grinding machine for agricultural material, such as those used for chopping and weeding pruning remains, according to claim 1.

Preferably, the push tines on each feed roller are those which are typically used in this type of machines. They have a flat, fin shape, oriented in a transversal direction, evenly distributed, i.e., uniformly along the entire length of the feed roller, in order to allow the material to be ground to be evenly pushed.

The two feed rollers are separated by a distance considered the opening of the inner region for grinding material. When the grinding machine is in operation, the two feed rollers rotate in opposite directions, towards the interior, so that any remains close to said material opening are pushed by the tines into the grinding region.

Also, during the operation of the grinding machine, the cutting rotor is rotating through the rotating cylinder, for this, both said cylinder and the feed rollers are connected to a motor, which may or may not be comprised in the grinding machine itself, connected by means of, for example, a transmission belt, a chain or a gear.

When indicated, that each pair of blades of the plurality of pairs of blades are evenly distributed in at least one helical direction defined by the longitudinal direction, it means that there is no accumulation of blades or gaps in the rotating cylinder and prevents all the material from being pushed to the same area of the cutting rotor. Each pair of blades is arranged along said rotating cylinder, following a constant distribution, in this case, following a helical distribution, uniformly distributed throughout the cylinder, thus guaranteeing that its entire extension has identical blade density.

The location of the cutting rotor, in the inner region for grinding material of the grinding machine, is determined by the operation configured for same, which consists of receiving the largest amount of material pushed by feed rollers, cutting and grinding same against the grinding strips.

The inner region for grinding material is defined by the area in which the material pushed by feed rollers is cut and chopped upon making contact with the cutting rotor and the grinding strips.

The second blade is offset, angularly from the first blade, with respect to the rotating cylinder. This offset relates to the leading edge of said blades, since their handle or body that is used to connect the blades to the rotating cylinder may not be offset, but coincident, for example, having a matching handle or connection.

The offset between the blade edges means that the first one is slightly ahead of the second, in terms of the rotating movement of the blades provided by the rotating cylinder. In this way, it is achieved that the machine of the invention does not squash the wood fibres, but rather first opens these fibres to subsequently grind them in a simpler manner.

Each pair of blades is attached to the rotating cylinder by a support, by means of a removable rigid connection between said support and each pair of blades. That is, if the blades wear out, they can be easily removed from the support. The connection between the support and the rotating cylinder can be removable or permanent.

In one embodiment, the cutting rotor comprises a gap, in a longitudinal direction between each pair of blades. In other words, there is a gap between each support, in the event that the embodiment comprises supports, and therefore, said cutting rotor comprises as many gaps as there are pairs of blades, except for the ends. In this way, it is intended to explain that the pairs of blades, as a whole, do not form a continuous helix, but rather that there are gaps between said pairs of blades.

In a preferred embodiment, each pair of blades is oriented in a transversal direction, perpendicular to the longitudinal direction. This orientation is determined by the attachment support for attaching to the rotating cylinder, in the event that the embodiment comprises said support. In this way, the blades are not inclined with respect to the axis defined by the rotating cylinder, but rather they are straight to facilitate the penetration of the edge into the material to be ground and, therefore, the cutting thereof.

In a preferred embodiment, each pair of blades comprises a longitudinal flat separation between the first blade and a second blade. In other words, both blades are not glued or in contact, but rather comprise a plurality of gaps, each of said gaps being located between each of the pairs of blades of the plurality of blades, said gap being determined by the thickness of the blade support, in the event that said embodiment comprises said support.

In one embodiment, the blades comprise a geometric configuration for reversible use. In other words, in the event that the edge of the blades wears out, they can be disassembled and installed in an opposite position, extending their useful life and taking advantage of the rest of the blade (with the exception of the edge) that is not damaged or deteriorated.

In one embodiment, the blades comprise a double leading tip. This double leading tip is determined by a concave shape of said edge. Through this concave configuration, the cut made by the blade is much more penetrating and aggressive with the material to be ground.

In one embodiment, the two grinding strips comprise:
- a first grinding strip located at a height higher than the cutting rotor; and
- a second grinding strip located at a height lower than the first grinding strip and in a position after the cutting rotor, opposite to the opening of the inner region for grinding material, with respect to said cutting rotor;
- wherein the two grinding strips delimit the inner region for grinding material;
wherein the cutting rotor is configured to drive the material received by the feed rollers towards the first grinding strip and towards the second grinding strip, in that order; and wherein the teeth of the first grinding strip are oriented in a direction perpendicular to the teeth of the second grinding strip.

Preferably, the grinding strips are also arranged perpendicular to each other, so that the first strip can be oriented in a horizontal direction, while the second grinding strip can be placed in a vertical position, with the grinding machine being in a normal position of use.

The indicated arrangement of the grinding strips with respect to the cutting rotor is defined based on the use of the grinding machine and the position thereof with respect to the ground, in a normal use of said machine.

The operation of this embodiment consists of the cutting rotor, by rotating on itself, moving the material to be chopped and ground, first, against the first grinding strip, where the blades and teeth of the first grinding strip intersect, cutting and reducing the size of said material. Subsequently, it transfers the cut material to the second grinding strip, where the blades and teeth of the second grinding strip intersect, cutting the excess pieces, reducing the size thereof. Once this material has been chopped or ground, it leaves the inner region for grinding material through a lower slot or outlet, releasing same to the ground where the material to be ground was located, but in pieces.

In this way, the grinding machine does not require an area, for a reserve chamber, where the ground and unground material accumulates, since all the material that enters through the opening of an inner region for grinding material undergoes a chopping process due to the second grinding strip, to be subsequently expelled.

In one embodiment, the grinding teeth of each grinding strip each comprise an individual part fixed to a longitudinal profile, also comprised in each grinding strip, said grinding teeth being oriented in a transversal direction. Specifically, it is the edge of the tooth that which is oriented in the transversal direction, as well as the edge of the blades.

In one embodiment, at least one grinding strip comprises two rows of grinding teeth, both oriented in the longitudinal direction. Having one or two rows of teeth in the grinding strips will depend on the quality of the desired grinding. The more rows it comprises, the further ground the material is (sometimes it is interesting to have a final processed material that is more or less ground). Moreover, the fact of having two rows of grinding teeth reduces the accumulation of ground material inside the grinding machine, as well as the need to have a reserve chamber where said material accumulates, thus avoiding jams in the machine.

In one embodiment, the grinding machine comprises a guide stop profile comprising at least one longitudinal bar, located next to the opening of the inner region for grinding material, and which is configured to limit the passage of material to be ground, between the plurality of pairs of blades and the grinding strips, only to that which is comprised between said plurality of pairs of blades.

This guide stop prevents pruning pieces or remains from getting stuck in the grinding machine, so that any piece to be chopped, which is introduced into the grinding machine, comes into contact with the edge of the blades and with the teeth. That is, the guide stop delimits the size of the inner region for grinding material.

In one embodiment, the grinding machine for agricultural material comprises a means of movement, such as wheels that can rest on a ground, which allow it to be dragged or moved by a tractor vehicle or similar.

### Description of the figures

To complete the description, and for the purpose of helping to make the features of the platform more readily understandable, this description is accompanied by a set of drawings constituting an integral part of the same, which by way of illustration and not limitation represents the following:
- Figure 1 shows a perspective view of the grinding machine for agricultural material, where the external structure, as well as the two feed rollers, can be observed.
- Figure 2 shows a perspective view of the grinding machine for agricultural material shown in figure 1, from a lower point of view, where the cutting rotor in the inner region for grinding material can be observed.
- Figure 3 shows a detailed view of Figure 2, where the cutting rotor between the two feed rollers can be seen more clearly, as well as the pairs of blades of said rotor connected to the rotating cylinder.
- Figure 4 shows a perspective view of the cutting rotor, showing the rotating cylinder, the distribution of the pairs of blades, as well as the supports for said blades, which allow their attachment to the rotating cylinder.
- Figure 5 shows a profile view of the grinding machine, without part of the lateral support structure of said machine, allowing its internal layout to be appreciated, with the two feed rollers, the cutting rotor, the two grinding strips and the guide stop profile.
- Figure 6 shows a lower, interior perspective view of the grinding machine, where the relationship between the pairs of blades and the teeth of the grinding strips can be observed.
- Figure 7 shows another interior, upper perspective view of the grinding machine, where the arrangement of the blades with respect to the teeth can be observed.

List of reference numbers shown in the figures:
1.- Grinding machine;
2.- Feed rollers;
   21.- Push tines;
3.- Cutting rotor;
   31.- Rotating cylinder;
   32.- First blades;
   33.- Second blades;
   34.- Support;
4.- First grinding strip;
   41.- Teeth of the first grinding strip;
5.- Second grinding strip;
   51.- Teeth of the second grinding strip; and
6.- Guide stop profile.

### Preferred description of the invention

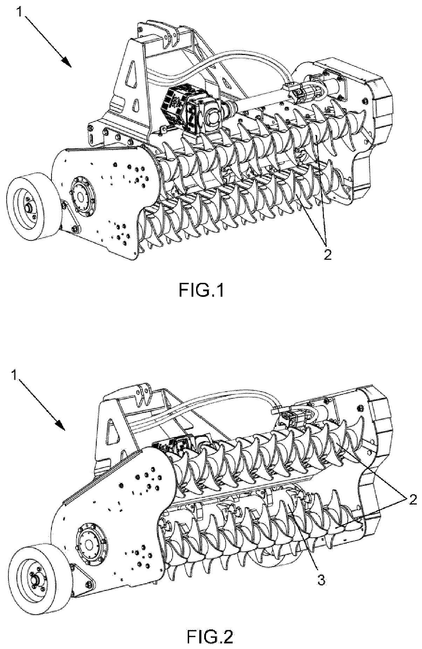

As can be seen in the figures, especially in Figures 1 and 2, the preferred invention consists of a grinding machine (1) especially suitable to grind scrub, clear land and/or remove pruning remains.

Said grinding machine (1) is similar to those existing on the market, with regard to its scope of use, since they consist of devices or mechanisms suitable for being pushed or towed, through irregular country terrain, by towing vehicles, such as tractors, which are vehicles especially suitable for agricultural work. To this end, this grinding machine (1), like most machines of this type on the market, comprises movement means, such as wheels supported on an axle, one of which can be seen in each figure 1 and 2.

Figure 2 shows two feed rollers (2) located in the front portion of the grinding machine (1). Said two feed rollers (2) each comprise a plurality of push tines (21) arranged evenly distributed in the longitudinal direction defined by the axes of said feed rollers (2). These push tines (21) allow, by rotating each of the feed rollers (2), the grinding machine (1) to attract and collect any remains found in said machine while it moves in a dragging direction. Said remains are pushed between the two feed rollers (2), through an opening, of an inner region for grinding material. Said opening is defined by the separation distance of both feed rollers (2), since all the material ground by the grinding machine (1) has to be introduced between the two feed rollers (2).

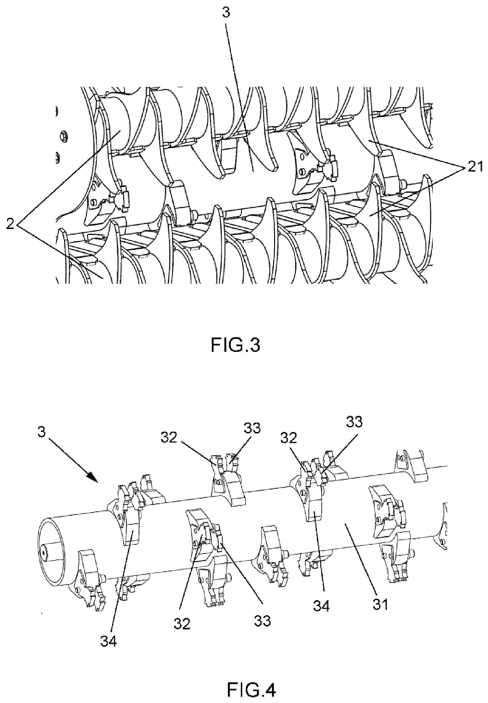

Once the material to be ground is pushed between the two feed rollers (2) to the inner region for grinding material, it reaches a cutting rotor (3), which can be easily observed in figures 3 to 7. Said cutting rotor (3) is located in the inner region for grinding material.

As can be seen in Figure 4, the cutting rotor (3) comprises a rotating cylinder (31), since it is connected to rotation means, at least by one of its ends, oriented in the same longitudinal direction as the feed rollers (2). **It** also comprises a plurality of pairs of blades (32, 33), attached by means of removable attachments to said rotating cylinder (31), through a corresponding support (34) for each pair of blades (32, 33).

As can be seen in Figure 4, the arrangement of the pairs of blades (32, 33) is not uneven but rather they are helically distributed, determined by the axis of the rotating cylinder (31), but with the supports (34) being always oriented in the same transversal direction, perpendicular to the longitudinal direction.

Figure 4 also shows that each pair of blades (32, 33) comprises a first blade (32) and a second blade (33), angularly offset from the first blade (32), with respect to the rotating cylinder (31). This means that, although both blades (32, 33) are connected to the same support (34), by means of a handle thereof, one of them is more advanced with respect to the other, in the circular movement of the rotating cylinder (31). **In** this way, if a pair of blades (32, 33) encounters an element to be ground, it would first be attacked by the first blade (32), which would cut the element, without squashing the same, and, subsequently, the second blade (33) could grind it more efficiently.

For the correct operation of the grinding machine (1), it is necessary that both the feed rollers (2) and the cutting rotor (3) be in continuous rotation. Therefore, the grinding machine (1) may comprise a motor, such as a hydraulic or direct current electric motor, and a motion transmission system that may comprise a gear, chains and/or belts, connected to said rotating elements. Moreover, the machine can be connected to an external motor, provided, for example, in the push tractor vehicle of said grinding machine (1). **In** other words, the invention comprises various alternatives to provide rotation movement to the rotating elements (2, 3).

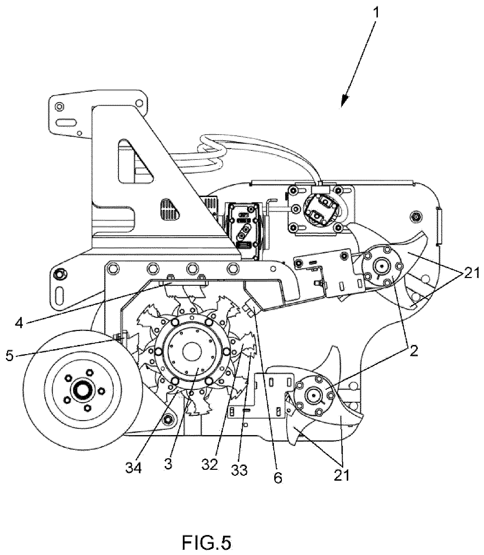

Figure 5 shows the components located inside the inner region for grinding material, as well as their arrangement.

Once the material to be ground has been pushed between the two feed rollers (2) to the inner region for grinding material, and has reached the cutting rotor (3), the pairs of blades (32, 33) thereof cut it by driving same, first towards a first grinding strip (4) located at a height higher than the cutting rotor (3). However, to prevent large pieces of waste to be ground, or pieces that could obstruct the mechanism, from being introduced, the machine comprises a guide stop profile (6) comprising at least one longitudinal bar, located next to the opening of the inner region for grinding material, oriented in the same longitudinal direction, which delimits or blocks the passage of material to be ground to a certain size, between the plurality of pairs of blades (32, 33) and the grinding strips (4, 5), only to that which is comprised between said plurality of pairs of blades (32, 33).

In other words, if, for example, a large piece of wood is introduced into the opening of an inner region for grinding material, between the two feed rollers (2), and reaches the cutting rotor (3), said piece of wood would be initially attacked by the pairs of blades (32, 33), (due to the rotating movement of the cutting rotor (3)) being ground into smaller pieces, until said pieces are housed in the gaps present between the pairs of blades (32, 33). In this way, the guide stop profile (6) causes the large pieces to be ground to be kept between the two feed rollers (2) and the cutting rotor (3) until they are broken down into smaller pieces.

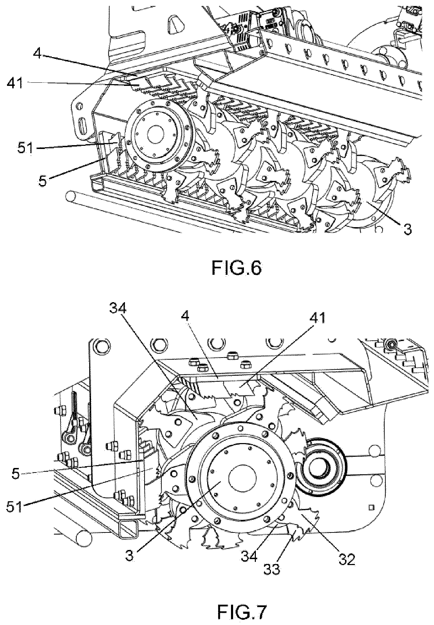

As can be seen in Figures 6 and 7, the blades (32, 33) comprise a geometric configuration for reversible use. In other words, when the edge of said blades (32, 33) wears out, they can be disassembled and reassembled in the opposite direction to the one initially assembled, since it has edges on both sides of the blade.

It can also be seen in both images that the blades (32, 33) comprise a double leading tip on their edge, comprising a concave or inwardly curved shape, which allows for better cutting of the material to be ground.

Once the smallest pieces are placed between the pairs of blades (32, 33), the rotating movement of the cutting rotor (3) drives said pieces towards the first grinding strip (4) located at a height higher than the cutting rotor (3), taking into account the normal position of use of the grinding machine, shown in figure 5.

The pieces that pass through the first grinding strip (4) are chopped into smaller pieces and are directed to a second grinding strip (5), which is located at a height lower than the first grinding strip (4) and in a position after the cutting rotor (3). In other words, on a side opposite to the opening of the inner grinding region, with respect to the cutting rotor (3). Therefore, the material to be ground passes through two grinding strips (4, 5) breaking down into small pieces.

These two grinding strips (4, 5) delimit the inner region for grinding material, since said material cannot leave said region if it does not pass between both grinding strips (4, 5).

As can be seen in Figure 6, each grinding strip (4, 5) comprises two rows of grinding teeth (41, 51) aligned in the longitudinal direction, the teeth of the first grinding strip (41) being oriented in a direction perpendicular to the teeth of the second grinding strip (51).

**In** fact, as can also be seen in Figure 6, the grinding teeth (41, 51) of each grinding strip (4, 5) each comprise an individual piece fixed to a longitudinal profile, said grinding teeth (41, 51) being oriented in a transversal direction, perpendicular to the longitudinal direction. This arrangement allows the blades (32, 33) to be interspersed with the grinding teeth (41, 51) during the rotation of the cutting rotor (3), without leaving free gaps, preventing large pieces of material from passing between them.

## Claims

1. A grinding machine (1) for agricultural material, wherein the grinding machine (1) comprises:
- two rotating feed rollers (2), both oriented in the same longitudinal direction, wherein each feed roller (2) comprises a plurality of push tines (21) arranged evenly distributed in the longitudinal direction, said feed rollers (2) being separated by an opening of an inner region for grinding material;
- a cutting rotor (3), located in the inner region for grinding material, comprising a rotating cylinder (31), oriented in the longitudinal direction, and a plurality of pairs of blades (32, 33) attached to said rotating cylinder (31), and
- two grinding strips (4, 5) oriented in the longitudinal direction, wherein each grinding strip (4, 5) comprises at least one row of grinding teeth (41, 51) aligned in the longitudinal direction;
wherein the two feed rollers (2) are configured to push, through the opening of the inner grinding region, material to be ground;
wherein the cutting rotor (3) is located in an input direction of material to be ground from the inner grinding region; and is configured to receive said material, pushed by the feed rollers (2);
wherein the cutting rotor (3) is configured to cut and drive the material received by the feed rollers (2) towards the two grinding strips (4, 5); and
wherein each pair of blades (32, 33) is attached to the rotating cylinder (31) by a support (34) by means of a removable rigid connection between said support (34) and each pair of blades (32,33), **characterised in that** each pair of blades of said plurality of pairs of blades is evenly arranged in at least one helical direction defined by the longitudinal direction; and each pair of blades comprises a first blade and a second blade, angularly offset from the first blade, with respect to the rotating cylinder.

2. The grinding machine (1), according to the preceding claim, wherein the cutting rotor (3) comprises a longitudinal gap between each pair of blades (32, 33).

3. The grinding machine (1), according to any of the preceding claims, wherein each pair of blades (32, 33) is oriented in a transversal direction, perpendicular to the longitudinal direction.

4. The grinding machine (1), according to any of the preceding claims, wherein each pair of blades (32, 33) comprises a longitudinal flat separation between the first blade (32) and the second blade (33).

5. The grinding machine (1), according to any of the preceding claims, wherein the blades (32, 33) comprise a geometric configuration for reversible use.

6. The grinding machine (1), according to any of the preceding claims, wherein the blades (32, 33) comprise a double leading tip.

7. The grinding machine (1), according to any of the preceding claims, wherein the two grinding strips (4, 5) comprise:
- a first grinding strip (4) located at a height higher than the cutting rotor (3); and
- a second grinding strip (5) located at a height lower than the first grinding strip (4) and in a position after the cutting rotor (3), opposite to the opening of the inner region for grinding material, with respect to said cutting rotor (3);
wherein the two grinding strips (4, 5) delimit the inner region for grinding material; wherein the cutting rotor (3) is configured to drive the material received by the feed rollers (2) towards the first grinding strip (4) and towards the second grinding strip (5), in that order; and
wherein the teeth of the first grinding strip (41) are oriented in a direction perpendicular to the teeth of the second grinding strip (51).

8. The grinding machine (1), according to the preceding claim, wherein the grinding teeth (41, 51) of each grinding strip (4, 5), each comprise an individual part fixed to a longitudinal profile further comprised in each grinding strip (4, 5), said grinding tooth (41, 51) being oriented in a transversal direction.

9. The grinding machine (1), according to any of the preceding claims, wherein at least one grinding strip (4, 5) comprises two rows of grinding teeth (41, 51), both oriented in the longitudinal direction.

10. The grinding machine (1), according to any of the preceding claims, comprising a guide stop profile (6) comprising at least one longitudinal bar, located next to the opening of the inner region for grinding material, which is configured to limit the passage of material to be ground, between the plurality of pairs of blades (32, 33) and the grinding strips (4, 5), only to that which is comprised between said plurality of pairs of blades (32, 33).

## Patentansprüche

1. Zerkleinerungsmaschine (1) für landwirtschaftliches Material, wobei die Zerkleinerungsmaschine (1) Folgendes umfasst:
- zwei rotierende Zuführwalzen (2), die beide in derselben Längsrichtung ausgerichtet sind, wobei jede Zuführwalze (2) eine Vielzahl von Schubzinken (21) umfasst, die gleichmäßig in der Längsrichtung verteilt angeordnet sind, wobei die Zuführwalzen (2) durch eine Öffnung einer inneren Region zum Zerkleinern von Material getrennt sind;
- einen Schneidrotor (3), der sich in der inneren Region zum Zerkleinern von Material befindet, umfassend einen rotierenden Zylinder (31), der in der Längsrichtung ausgerichtet ist, und eine Vielzahl von Paaren von Klingen (32, 33), die an dem rotierenden Zylinder (31) befestigt sind, und
- zwei Zerkleinerungsstreifen (4, 5), die in der Längsrichtung ausgerichtet sind, wobei jeder Zerkleinerungsstreifen (4, 5) mindestens eine Reihe von Zerkleinerungszähnen (41, 51) umfasst, die in der Längsrichtung ausgerichtet sind;
wobei die zwei Zuführwalzen (2) dazu konfiguriert sind, zu zerkleinerndes Material durch die Öffnung der inneren Zerkleinerungsregion zu schieben;
wobei sich der Schneidrotor (3) in einer Eingaberichtung von zu zerkleinerndem Material von der inneren Zerkleinerungsregion befindet; und dazu konfiguriert ist, das durch die Zuführwalzen (2) geschobene Material aufzunehmen;
wobei der Schneidrotor (3) dazu konfiguriert ist, das durch die Zuführwalzen (2) aufgenommene Material zu schneiden und in Richtung der zwei Zerkleinerungsstreifen (4, 5) zu treiben; und wobei jedes Paar von Klingen (32, 33) an dem rotierenden Zylinder (31) durch eine Stütze (34) mittels einer entfernbaren starren Verbindung zwischen der Stütze (34) und jedem Paar von Klingen (32, 33) angebracht ist, **dadurch gekennzeichnet, dass** jedes Paar von Klingen der Vielzahl von Paaren von Klingen gleichmäßig in mindestens einer spiralförmigen Richtung, die durch die Längsrichtung definiert ist, angeordnet ist; und jedes Paar von Klingen eine erste Klinge und eine zweite Klinge umfasst, die von der ersten Klinge in Bezug auf den rotierenden Zylinder winkelversetzt ist.

2. Zerkleinerungsmaschine (1) nach dem vorhergehenden Anspruch, wobei der Schneidrotor (3) einen Längsspalt zwischen jedem Paar von Klingen (32, 33) umfasst.

3. Zerkleinerungsmaschine (1) nach einem der vorhergehenden Ansprüche, wobei jedes Paar von Klingen (32, 33) in einer Querrichtung, die senkrecht zu der Längsrichtung verläuft, ausgerichtet ist.

4. Zerkleinerungsmaschine (1) nach einem der vorhergehenden Ansprüche, wobei jedes Paar von Klingen (32, 33) eine längliche flache Trennung zwischen der ersten Klinge (32) und der zweiten Klinge (33) umfasst.

5. Zerkleinerungsmaschine (1) nach einem der vorhergehenden Ansprüche, wobei die Klingen (32, 33) eine geometrische Konfiguration zur reversiblen Verwendung umfassen.

6. Zerkleinerungsmaschine (1) nach einem der vorhergehenden Ansprüche, wobei die Klingen (32, 33) eine Doppelleitspitze umfassen.

7. Zerkleinerungsmaschine (1) nach einem der vorhergehenden Ansprüche, wobei die zwei Zerkleinerungsstreifen (4, 5) Folgendes umfassen:
- einen ersten Zerkleinerungsstreifen (4), der sich auf einer höheren Höhe als der Schneidrotor (3) befindet; und
- einen zweiten Zerkleinerungsstreifen (5), der sich auf einer niedrigeren Höhe als der erste Zerkleinerungsstreifen (4) und in einer Position nach dem Schneidrotor (3) gegenüber der Öffnung der inneren Region zum Zerkleinern von Material in Bezug auf den Schneidrotor (3) befindet;
wobei die zwei Zerkleinerungsstreifen (4, 5) die innere Region zum Zerkleinern von Material begrenzen; wobei der Schneidrotor (3) dazu konfiguriert ist, das durch die Zuführwalzen (2) aufgenommene Material in Richtung des ersten Zerkleinerungsstreifens (4) und in Richtung des zweiten Zerkleinerungsstreifens (5) in dieser Reihenfolge zu treiben; und
wobei die Zähne des ersten Zerkleinerungsstreifens (41) in einer Richtung ausgerichtet sind, die senkrecht zu den Zähnen des zweiten Zerkleinerungsstreifens (51) verläuft.

8. Zerkleinerungsmaschine (1) nach dem vorhergehenden Anspruch, wobei die Zerkleinerungszähne (41, 51) jedes Zerkleinerungsstreifens (4, 5) jeweils einen individuellen Teil umfassen, der an einen Längsprofil befestigt ist, das ferner in jedem Zerkleinerungsstreifen (4, 5) umfasst ist, wobei die Zerkleinerungszähne (41, 51) in einer Querrichtung ausgerichtet sind.

9. Zerkleinerungsmaschine (1) nach einem der vorhergehenden Ansprüche, wobei mindestens ein Zerkleinerungsstreifen (4, 5) zwei Reihen von Zerkleinerungszähnen (41, 51) umfasst, die beide in der Längsrichtung ausgerichtet sind.

10. Zerkleinerungsmaschine (1) nach einem der vorhergehenden Ansprüche, umfassend ein Führungsanschlagsprofil (6), das mindestens eine Längsstange umfasst, die sich neben der Öffnung der inneren Region zum Zerkleinern von Material befindet, und das dazu konfiguriert ist, den Durchgang von zu zerkleinerndem Material zwischen der Vielzahl von Paaren von Klingen (32, 33) und den Zerkleinerungsstreifen (4, 5) nur auf das zu begrenzen, was zwischen der Vielzahl von Paaren von Klingen (32, 33) umfasst ist.

## Revendications

1. Machine de broyage (1) pour matériau agricole, dans laquelle la machine de broyage (1) comprend :
deux rouleaux d'alimentation rotatifs (2), tous deux orientés dans la même direction longitudinale, dans laquelle chaque rouleau d'alimentation (2) comprend une pluralité de dents de poussée (21) agencées en étant régulièrement réparties dans la direction longitudinale, lesdits rouleaux d'alimentation (2) étant séparés par une ouverture d'une région interne pour le matériau de broyage ;
un rotor de coupe (3) situé dans la région interne pour broyer le matériau, comprenant un cylindre rotatif (31), orienté dans la direction longitudinale, et une pluralité de paires de lames (32, 33) fixées sur ledit cylindre rotatif (31), et
deux bandes de broyage (4, 5) orientées dans la direction longitudinale, dans laquelle chaque bande de broyage (4, 5) comprend au moins une rangée de dents de broyage (41, 51) alignées dans la direction longitudinale ;
dans laquelle les deux rouleaux d'alimentation (2) sont configurés pour pousser, par le biais de l'ouverture de la région de broyage interne, le matériau à broyer ;
dans laquelle le rotor de coupe (3) est situé dans une direction d'entrée du matériau à broyer à partir de la région de broyage interne ; et est configuré pour recevoir ledit matériau, poussé par les rouleaux d'alimentation (2) ;
dans laquelle le rotor de coupe (3) est configuré pour couper et entraîner le matériau reçu par les rouleaux d'alimentation (2) vers les deux bandes de broyage (4, 5) ; et
dans laquelle chaque paire de lames (32, 33) est fixée au cylindre rotatif (31) par un support (34) au moyen d'un raccordement rigide amovible entre ledit support (34) et chaque paire de lames (32, 33), **caractérisée en ce que** chaque paire de lames de ladite pluralité de paires de lames est régulièrement agencée dans au moins une direction hélicoïdale définie par la direction longitudinale ; et chaque paire de lames comprend une première lame et une deuxième lame, angulairement décalée de la première lame, par rapport au cylindre rotatif.

2. Machine de broyage (1) selon la revendication précédente, dans lequel le rotor de coupe (3) comprend un interstice longitudinal entre chaque paire de pales (32, 33).

3. Machine de broyage (1) selon l'une quelconque des revendications précédentes, dans laquelle chaque paire de lames (32, 33) est orientée dans une direction transversale, perpendiculaire à la direction longitudinale.

4. Machine de broyage (1) selon l'une quelconque des revendications précédentes, dans laquelle chaque paire de lames (32, 33) comprend une séparation plate longitudinale entre la première lame (32) et la deuxième lame (33).

5. Machine de broyage (1) selon l'une quelconque des revendications précédentes, dans laquelle les lames (32, 33) comprennent une configuration géométrique pour un usage réversible.

6. Machine de broyage (1) selon l'une quelconque des revendications précédentes, dans laquelle les lames (32, 33) comprennent une double pointe d'attaque.

7. Machine de broyage (1) selon l'une quelconque des revendications précédentes, dans laquelle les deux bandes de broyage (4, 5) comprennent :
une première bande de broyage (4) située à une hauteur supérieure au rotor de coupe (3) ; et
une deuxième bande de broyage (5) située à une hauteur inférieure à la première bande de broyage (4) et dans une position après le rotor de coupe (3), opposée à l'ouverture de la région interne pour broyer le matériau, par rapport audit rotor de coupe (3) ;
dans laquelle les deux bandes de broyage (4, 5) délimitent la région interne pour broyer le matériau ;
dans laquelle le rotor de coupe (3) est configuré pour entraîner le matériau reçu par les rouleaux d'alimentation (2) vers la première bande de broyage (4) et vers la deuxième bande de broyage (5), dans cet ordre ; et
dans laquelle les dents de la première bande de broyage (41) sont orientées dans une direction perpendiculaire aux dents de la deuxième bande de broyage (51).

8. Machine de broyage (1) selon la revendication précédente, dans laquelle les dents de broyage (41, 51) de chaque bande de broyage (4, 5), comprennent chacune une partie individuelle fixée à un profil longitudinal compris en outre dans chaque bande de broyage (4, 5), ladite dent de broyage (41, 51) étant orientée dans une direction transversale.

9. Machine de broyage (1) selon l'une quelconque des revendications précédentes, dans laquelle au moins une bande de broyage (4, 5) comprend deux rangées de dents de broyage (41, 51), toutes deux orientées dans la direction longitudinale.

10. Machine de broyage (1) selon l'une quelconque des revendications précédentes, comprenant un profil de butée de guidage (6) comprenant au moins une barre longitudinale, située à proximité de l'ouverture de la région interne pour broyer le matériau, qui est configurée pour limiter le passage du matériau à broyer, entre la pluralité de paires de lames (32, 33) et les bandes de broyage (4, 5), uniquement pour celle qui est comprise entre ladite pluralité de paires de lames (32, 33).
